(19) **Europäisches Patentamt**
**European Patent Office**
**Office européen des brevets**

(11) **EP 4 516 634 B1**

(12) **EUROPEAN PATENT SPECIFICATION**

(45) Date of publication and mention
of the grant of the patent:
**18.03.2026 Bulletin 2026/12**

(21) Application number: **22940124.5**

(22) Date of filing: **27.04.2022**

(51) International Patent Classification (IPC):
***G01M 17/06*** (2006.01)    ***G01H 1/00*** (2006.01)
***B62D 5/04*** (2006.01)

(52) Cooperative Patent Classification (CPC):
**G01M 17/06; G01H 1/003; B62D 5/0457**

(86) International application number:
**PCT/JP2022/019025**

(87) International publication number:
**WO 2023/209844 (02.11.2023 Gazette 2023/44)**

(54) **INPUT/OUTPUT DEVICE AND STEERING MEASUREMENT DEVICE**

EINGABE-/AUSGABEVORRICHTUNG UND LENKMESSVORRICHTUNG

DISPOSITIF D'ENTRÉE/SORTIE ET DISPOSITIF DE MESURE DE DIRECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.03.2025 Bulletin 2025/10**

(73) Proprietor: **MITSUBISHI ELECTRIC
CORPORATION
Chiyoda-ku
Tokyo 100-8310 (JP)**

(72) Inventors:
  • **ORII Masahiko
  Tokyo 100-8310 (JP)**

  • **NATSUHARA Hiroya
  Tokyo 100-8310 (JP)**
  • **KEZOBO Isao
  Tokyo 100-8310 (JP)**
  • **HASHIMOTO Akihiko
  Tokyo 100-8310 (JP)**

(74) Representative: **Hoffmann Eitle
Patent- und Rechtsanwälte PartmbB
Arabellastraße 30
81925 München (DE)**

(56) References cited:
**WO-A1-2014/122907**    **JP-A- 2005 186 830**
**JP-A- 2005 186 830**    **JP-A- 2006 188 183**
**JP-A- 2006 188 183**    **JP-A- 2016 142 700**
**US-A1- 2015 151 783**

**Description**

Technical Field

The present disclosure relates to an input/output device and a steering measurement device.

Background Art

An electric power steering device includes a rotating machine (motor) that generates a steering assist torque for steering, and a control device that controls the rotating machine, and adds a steering assist force to a steering mechanism of a vehicle such as an automobile. The steering measurement device is a device for conducting a measurement test for identifying mechanical constants of the electric power steering device.

Patent Document 1 discloses a steering measurement device of the related art, which includes an input/output device that inputs and outputs a signal for identifying characteristics of steering and a control device that controls a rotating machine provided in an electric power steering device. In the steering measurement device, the input/output device outputs an excitation instruction to the control device to excite the rotating machine, and acquires response data obtained as a result and an excitation command. The input/output device then identifies mechanical constants of the electric power steering device based on the acquired response data and the excitation command, and derives control constants from the identified mechanical constants.

Patent Document 2 discloses a tire abnormality detection device that detects a local abnormality of a running tire.

Citation List

Patent Documents

Patent Document 1: Japanese Patent No. 6129409
Patent Document 2: Japanese Patent Application No. JP 2005 186830 A

Summary of Invention

PROBLEM TO BE SOLVED BY THE INVENTION

Meanwhile, during a steering operation of the steering, vibration may occur due to various factors. Therefore, in order to suppress such vibration, it is necessary to provide appropriate settings for a controller provided in the control device that controls the rotating machine, according to factors of the vibration. For example, in a case where vibration occurs due to disturbances caused by a structure of a steering gear or a motor, road surface disturbances, and the like, it is necessary to set the controller after considering disturbance transmission characteristics of the controller. In addition, in a case where vibration occurs due to poor stability of the controller, it is necessary to set the controller after considering the stability of the controller.

In addition, even in a case where mechanical characteristics, frequency characteristics, or noise characteristics of the steering are identified and the controller is set in consideration of the identification results, vibration or the noise may occur due to an identification error, an unintended disturbance, or the like. In such a case, it is necessary to review the setting of the controller again. However, there is a problem in that it takes a significant amount of time and effort for users (testers) themselves to analyze a vibration factor each time vibration occurs, and the number of operations required for setting the controller is increased.

In addition, as a method of adjusting setting parameters of the controller, a method of adjusting setting parameters by trial and error without specifying vibration factors may be considered. However, the controller in which the set parameters are adjusted without knowing the vibration factors may not be a fundamental measure against the vibration. Therefore, in the end, there is a problem in that the vibration cannot be suppressed or a significant amount of time is required for adjustment for suppressing the vibration.

The present disclosure has been made in view of the above circumstances, and an object of the present disclosure is to provide an input/output device and a steering measurement device capable of analyzing and estimating a vibration factor without requiring a significant amount of time or a significant effort.

MEANS TO SOLVE THE PROBLEM

In order to solve the above-described problem, an input/output device according to an aspect of the present disclosure includes: a vibration factor estimation unit configured to be connected for communication to a control device for controlling a rotating machine provided in an electric power steering device provided in a vehicle to generate a steering assist force for a steering, to acquire, during a steering operation of the steering, response data indicating a response to a steering operation of the electric power steering device detected by the control device, to extract a feature amount related to a vibration or a noise generated during the steering operation of the steering from the response data, and to estimate a vibration factor candidate, which is a candidate for a vibration factor, based on the feature amount; and an output unit configured to output the vibration factor candidate.

In addition, a steering measurement device according to another aspect of the present disclosure includes: the input/output device described above; and a control device configured to be connected for communication to the input/output device and to control a rotating machine provided in an electric power steering device for generating a steering assist force for a steering provided in a vehicle, in which the control device transmits a response of the electric power steering device detected when the steering is steered, to the input/output device as the response data.

EFFECTS OF THE INVENTION

According to the present disclosure, there is an effect that a vibration factor can be analyzed and estimated without requiring a significant amount of time or a significant effort. Accordingly, a user (tester) himself/herself does not need to analyze the vibration factor separately, and setting of a controller can be performed according to the vibration factor, so that the number of operations required for the setting of the controller can be reduced.

Brief Description of Drawings

[FIG. 1] FIG. 1 is a configuration diagram showing a steering measurement device and an electric power steering device according to a first embodiment of the present disclosure.
[FIG. 2] FIG. 2 is a block diagram showing a configuration of a main part of a control device provided in the steering measurement device according to the first embodiment of the present disclosure.
[FIG. 3] FIG. 3 is a block diagram showing a configuration of a main part of an input/output device provided in the steering measurement device according to the first embodiment of the present disclosure.
[FIG. 4] FIG. 4 is a block diagram showing an internal configuration of a vibration factor estimation unit in the first embodiment of the present disclosure.
[FIG. 5] FIG. 5 is a diagram showing feature amounts used for vibration factor estimation in the first embodiment of the present disclosure.
[FIG. 6] FIG. 6 is a diagram showing frequency thresholds for the vibration factor estimation in the first embodiment of the present disclosure.
[FIG. 7] FIG. 7 is a flowchart showing a process performed by a vibration classification unit in the first embodiment of the present disclosure.
[FIG. 8] FIG. 8 is a diagram showing conditional expressions used in the process of the vibration classification unit in the first embodiment of the present disclosure.
[FIG. 9] FIG. 9 is a block diagram showing an internal configuration of the vibration factor estimation unit in a second embodiment of the present disclosure.
[FIG. 10] FIG. 10 is a diagram showing a simulation model used in the second embodiment of the present disclosure.

[FIG. 11] FIG. 11 is a diagram for describing dynamic time warping (DTW), which is a reproduction determination method in the second embodiment of the present disclosure.
[FIG. 12] FIG. 12 is a diagram for describing a method of preventing erroneous determination by using DTW, which is the reproduction determination method in the second embodiment of the present disclosure.
[FIG. 13] FIG. 13 is a diagram showing a relationship between a DTW distance and a magnitude of an influence of a vibration factor in the second embodiment of the present disclosure.
[FIG. 14] FIG. 14 is a flowchart showing a process performed by a simulation search unit in the second embodiment of the present disclosure.
[FIG. 15] FIG. 15 is a block diagram showing a configuration of a main part of an input/output device provided in the steering measurement device according to a third embodiment of the present disclosure.
[FIG. 16] FIG. 16 is a block diagram showing a configuration of a main part of an input/output device provided in the steering measurement device according to a fourth embodiment of the present disclosure.

Description of Embodiments

Hereinafter, an input/output device and a steering measurement device according to an embodiment of the present disclosure will be described in detail with reference to the drawings.

[First Embodiment]

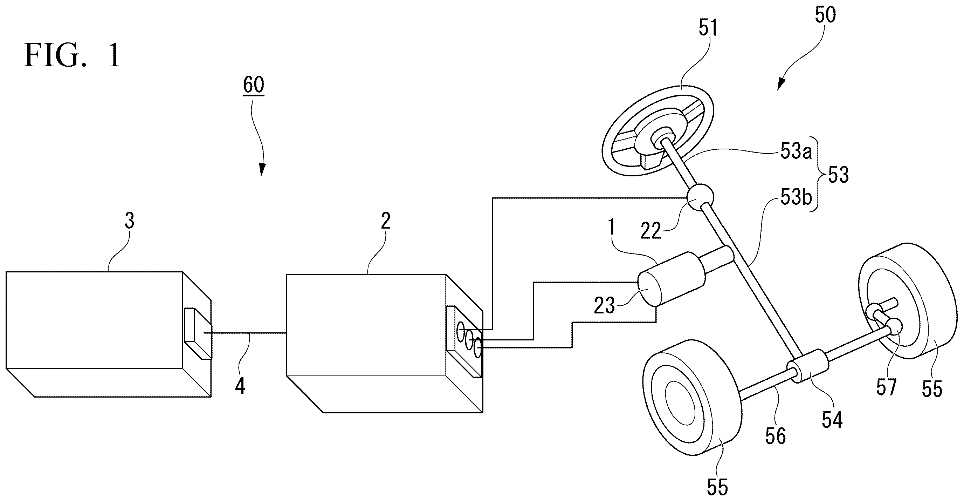

FIG. 1 is a configuration diagram showing a steering measurement device and an electric power steering device according to a first embodiment of the present disclosure. As shown in FIG. 1, an electric power steering device 50 includes a steering wheel 51, a steering shaft 53, a rack and pinion gear 54, wheels 55, tie rods 56, knuckle arms 57, a torque detector 22, a rotation detector 23, a rotating machine 1, and a control device 2.
A hardware configuration of the electric power steering device 50 is similar to that of an electric power steering device that has been provided in the related art, which is mounted on a vehicle and mass-produced. However, in addition to a function of controlling the rotating machine 1 to generate an assist torque in response to a steering operation of a driver, the control device 2 has an additional function of transmitting response of the electric power steering device 50 detected during the steering operation to an input/output device 3 as response data. It should be noted that the response data includes a rotation speed and a steering torque detected by the rotation detector 23 and the torque detector 22, and a current detected by a current detector 21 described below. The details of the function added to the control device 2 will be described later.

The steering measurement device 60 according to the present embodiment is a device for estimating a vibration factor during a steering operation of a steering. The steering measurement device 60 is constituted by the control device 2, the torque detector 22, and the rotation detector 23 that are provided in the electric power steering device 50, and the input/output device 3 that is connected to the control device 2 by a communication line 4. The communication line 4 constitutes a part of an in-vehicle communication network mounted in the vehicle. Here, the in-vehicle communication network may be, for example, a controller area network (CAN) (registered trademark), FlexRay (registered trademark), or Ethernet (registered trademark). As the communication line 4, an in-vehicle communication network cable appropriate for the type of in-vehicle communication network mounted in the vehicle can be used.

Next, the electric power steering device 50 and the steering measurement device 60 will be described in detail. Hereinafter, first, the details of the electric power steering device 50 will be described, and then, the details of the control device 2 and the input/output device 3 provided in the steering measurement device 60 will be described.

<Electric Power Steering Device>

The steering wheel 51 is a so-called handle, and is operated by the driver (not shown) of the vehicle to provide a steering angle to the steering wheels (wheels 55) of the vehicle. The steering shaft 53 is constituted by an input shaft 53a connected to a steering wheel 51 side and an output shaft 53b connected to a rack and pinion gear 54 side. The input shaft 53a and the output shaft 53b are connected to each other by a torsion bar (not shown).

The torsion bar is disposed in the torque detector 22 and passes axially through the torque detector 22. The torsion bar undergoes torsion in response to the steering torque applied to the steering wheel 51 by an operation of the driver, and the torque detector 22 detects a direction and an amount of this torsion. In the following, the steering wheel 51, the steering shaft 53, and the torsion bar will be collectively referred to as "steering".

The rack and pinion gear 54 includes a pinion gear (not shown) attached to a tip end of the output shaft 53b and a rack (not shown) that meshes with the pinion gear, and converts a rotational motion of the pinion gear into a reciprocating motion. The rack and the wheel 55 are connected to each other via the tie rod 56 and the knuckle arm 57.

The torque detector 22 detects the steering torque applied to the torsion bar by the driver steering the steering wheel 51. When the steering torque is applied, the torsion bar undergoes torsion that is substantially proportional to the steering torque. The torque detector 22 detects this torsional angle and converts the torsional angle into a steering torque. The rotation detector 23 is attached to a rotating shaft of the rotating machine 1 and detects a rotation speed of the rotating shaft.

The rotating machine 1 generates a steering assist torque for the steering under the control of the control device 2. The rotating machine 1 is configured with, for example, an alternating current motor, such as a permanent magnet type synchronous motor or an induction motor, or a direct current motor. The control device 2 controls the rotating machine 1 based on the steering torque converted by the torque detector 22 and the rotation speed detected by the rotation detector 23 to generate the steering assist torque for the steering.

Next, an operation of the electric power steering device 50 will be described. In FIG. 1, when the steering torque is applied to the steering wheel 51 by a steering operation of the driver, the steering torque is transmitted to the rack and pinion gear 54 through the torsion bar in the torque detector 22 and the steering shaft 53. Furthermore, the steering torque is transmitted to the rack in the rack and pinion gear 54 via the rack and pinion gear 54. Then, the tie rod 56 pushes the knuckle arm 57 in the wheel 55 on one side, and the tie rod 56 pulls the knuckle arm 57 in the wheel 55 on the opposite side. As a result, a steering angle is applied to the wheels 55, and the wheels 55 are turned.

On the other hand, when the steering torque is applied to the steering wheel 51 by the steering operation of the driver, the steering torque is detected by the torque detector 22. Specifically, when the steering torque is applied, the torsion bar undergoes torsion substantially proportional to the steering torque, and the torsional angle is detected by the torque detector 22 and converted into the steering torque. In addition, the rotation speed of the rotating shaft of the rotating machine 1 is detected by the rotation detector 23.

The steering torque converted by the torque detector 22 and the rotation speed detected by the rotation detector 23 are input to the control device 2, and a current command corresponding to the steering assist torque to be generated in the rotating machine 1 is determined according to these signals. Then, a current corresponding to the determined current command is supplied to the rotating machine 1, and the rotating machine 1 generates the steering assist torque for the steering. The steering assist torque generated by the rotating machine 1 is transmitted to the steering shaft 53 and reduces the steering torque applied by the driver during the steering operation. The electric power steering device 50 mounted in the vehicle is configured as described above, applies the steering assist force by the rotating machine 1 to the steering wheel 51, and functions as a driving assist device.

<Steering Measurement Device>

<<Control Device>>

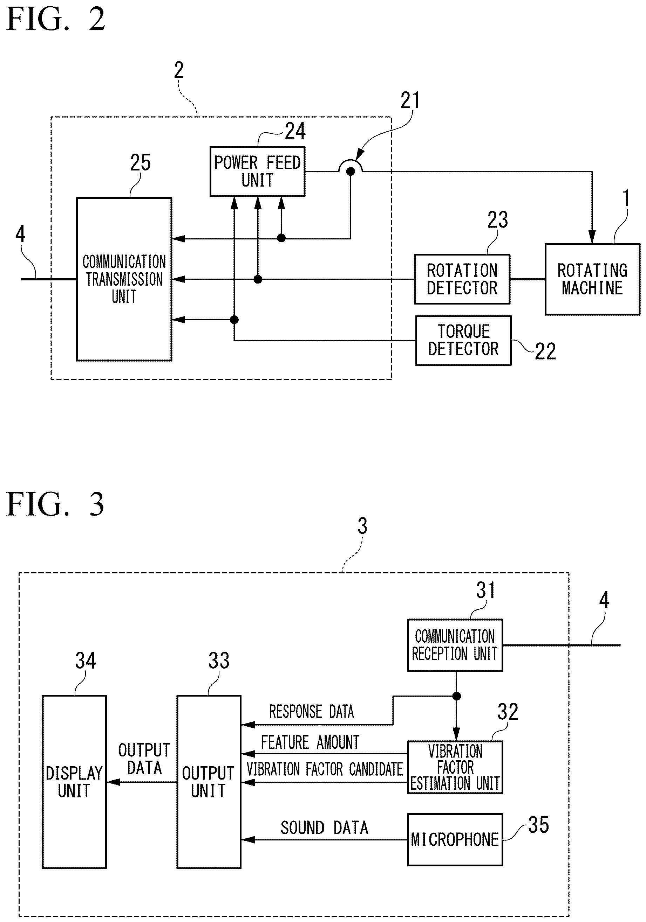

FIG. 2 is a block diagram showing a configuration of a main part of the control device provided in the steering measurement device according to the first embodiment of the present disclosure. As shown in FIG. 2, the control device 2 includes the current detector 21, the torque detector 22, the rotation detector 23, a power feed unit 24, and a communication transmission unit 25. In the configuration of the control device 2, the torque detector 22, the rotation detector 23, and the power feed unit 24 can be existing ones provided in a general control device of the electric power steering device 50.

The current detector 21 detects a current flowing in the rotating machine 1 when a voltage is applied to the rotating machine 1 from the power feed unit 24. Since the torque detector 22 and the rotation detector 23 are the same as those described in the description of the electric power steering device 50, the description thereof will not be repeated here.

The power feed unit 24 determines a current command corresponding to the steering assist torque to be generated in the rotating machine 1 according to the steering torque signal detected by the torque detector 22 and the rotation speed signal detected by the rotation detector 23. The power feed unit 24 generates a voltage command for controlling the current to be supplied to the rotating machine 1 based on the determined current command and the current signal detected by the current detector 21. Then, the power feed unit 24 applies a voltage to the rotating machine 1 by a drive circuit (not shown) according to the generated voltage command to generate the steering assist torque on the rotating machine 1.

The communication transmission unit 25 transmits the response data obtained by the steering operation to the input/output device 3. In addition, as described above, the response data includes the current (current detection value) detected by the current detector 21, the rotation speed (rotation speed detection value) detected by the rotation detector 23, and the steering torque (steering torque detection value) detected by the torque detector 22.

<<Input/Output Device>>

FIG. 3 is a block diagram showing a configuration of a main part of the input/output device provided in the steering measurement device according to the first embodiment of the present disclosure. As shown in FIG. 3, the input/output device 3 includes a communication reception unit 31, a vibration factor estimation unit 32, an output unit 33, a display unit 34, and a microphone 35 (voice detector). The input/output device 3 performs various processes based on the response data received by the communication reception unit 31 and sound data detected by the microphone 35.

The communication reception unit 31 receives the response data transmitted from the control device 2 via the communication line 4. The communication reception unit 31 outputs the received response data to the vibration factor estimation unit 32 and the output unit 33. The vibration factor estimation unit 32 calculates a feature amount of the vibration included in the response data based on the response data output from the communication reception unit 31, and estimates a vibration factor based on the calculated feature amount. The vibration factor estimation unit 32 determines the estimated vibration factor as a vibration factor candidate and outputs the feature amount and the vibration factor candidate to the output unit 33. It should be noted that details of the vibration factor estimation unit 32 will be described below.

The microphone 35 detects a sound generated inside the vehicle during the steering operation of the steering, and outputs the detected sound to the output unit 33 as sound data. The microphone 35 is provided so that noise can be confirmed from the sound data as well as the response data.

The output unit 33 outputs, as output data, one or more pieces of data including at least the vibration factor candidate, out of the response data output from the communication reception unit 31, the vibration factor candidate and the feature amount output from the vibration factor estimation unit 32, and the sound data output from the microphone 35. The output unit 33 outputs the output data in any of a numerical form, a text form, or a figure form. The display unit 34 displays the output data output from the output unit 33.

As hardware constituting the input/output device 3, for example, a computer such as a tablet type computer or a notebook type computer can be used. In a case where these computers are used, displays and microphones provided in these computers can be used as the display unit 34 and the microphone 35 shown in FIG. 3. In a case where these computers do not have a built-in microphone or a high-performance microphone is desired to be used, a microphone or a sound level meter may be separately prepared and connected. The output data output from the output unit 33 may be stored in a form that can be checked by the user (for example, text form) or may be output to the outside.

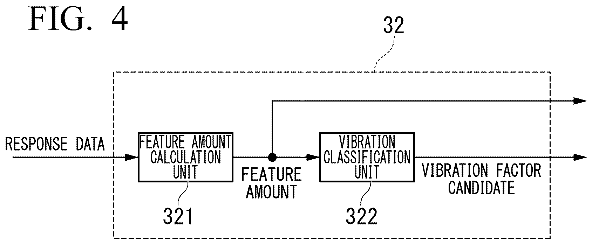

FIG. 4 is a block diagram showing an internal configuration of the vibration factor estimation unit in the first embodiment of the present disclosure. As shown in FIG. 4, the vibration factor estimation unit 32 includes a feature amount calculation unit 321 and a vibration classification unit 322. The feature amount calculation unit 321 extracts and digitizes an amount indicating a feature of the vibration from the response data as the feature amount. Examples of the feature amount include seven items of "turnback ripple", "amplitude of main vibration", "frequency of main vibration", "rotation synchronous disturbance-likeness", "rotation synchronous disturbance degree", "peak amplitude of high frequency", and "peak frequency of high frequency" in each of the steering torque detection value, the current detection value, and the rotation speed detection value when vibration occurs.

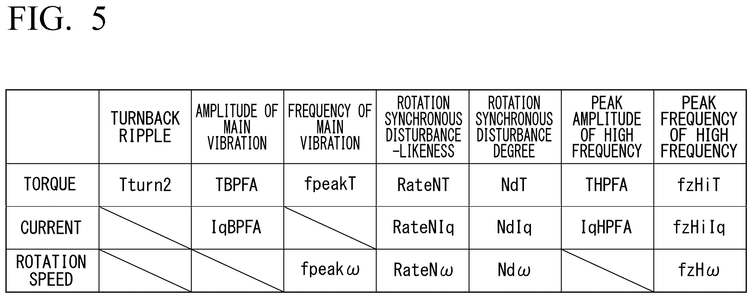

FIG. 5 is a diagram showing the feature amounts used for vibration factor estimation in the first embodiment of the present disclosure. In the vibration factor estimation unit 32, the feature amounts used for the vibration factor estimation are 16 items shown in FIG. 5. Specifically, the items are as follows.

· Steering torque detection value (7 items): "Turnback ripple", "amplitude of main vibration", "frequency of main vibration", "rotation synchronous disturbance-likeness", "rotation synchronous disturbance degree", "peak amplitude of high frequency", and "peak frequency of high frequency".
· Current detection value (5 items): "Amplitude of main vibration", "rotation synchronous disturbance-likeness", "rotation synchronous disturbance degree", "peak amplitude of high frequency", and "peak frequency of high frequency".
· Rotation Speed Detection Value (4 items): "Frequency of main vibration", "rotation synchronous disturbance-likeness", "rotation synchronous disturbance degree", and "peak frequency of high frequency".

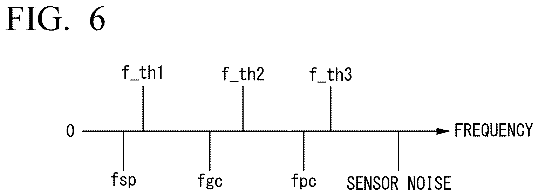

FIG. 6 is a diagram showing frequency thresholds for the vibration factor estimation in the first embodiment of the present disclosure. A frequency of vibration is important information for the extraction of the feature amount and the classification of the vibration factors. Frequency thresholds f_th1, f_th2, and f_th3 shown in FIG. 6 are set in order to perform the classification according to the frequency of the vibration. Here, fsp is a disturbance transmission peak frequency, fgc is a gain crossover frequency, and fpc is a phase crossover frequency, as shown in FIG. 6. These frequencies are frequencies determined by the characteristics of the controller and the steering.

The frequency thresholds f_th1, f_th2, and f_th3 are defined by the following expressions.

$$f\_th1 = (fsp + fgc)/2$$

$$f\_th2 = (fgc + fpc)/2$$

$$f\_th3 = min(fpc + f\alpha, fn)$$

Here, min in the above expression means selecting a smaller number among the numbers in parentheses. In addition, $f\alpha$ in the expression is a phase crossover frequency threshold margin, and fn is a sensor noise threshold frequency.

The frequency threshold f_th1 is a frequency threshold that classifies disturbance transmission characteristic deterioration and phase margin deterioration.

The frequency threshold f_th2 is a frequency threshold that classifies the phase margin deterioration and gain margin deterioration. The frequency threshold f_th3 is a frequency threshold that classifies the gain margin deterioration and sensor noise. The phase crossover frequency threshold margin $f\alpha$ and the sensor noise threshold frequency fn may be set based on a highest frequency of gain margin deterioration vibration that may occur from past cases or the like, or a noise frequency that may occur as a problem.

Next, each feature amount will be specifically described.

· "Turnback Ripple"

As shown in FIG. 5, the turnback ripple is a feature amount extracted only from the steering torque detection value, and indicates a difference between a maximum value and a minimum value of the steering torque detection value immediately after a sign of the rotation speed detection value is switched. A frequency calculated from an interval between the maximum value and the minimum value is extracted as the turnback ripple in a case where the frequency is equal to or less than a threshold set based on the frequency threshold f_th1.

· "Amplitude of Main vibration" and "Frequency of Main Vibration"

An amplitude of main vibration is a feature amount extracted from two of the steering torque detection value and the current detection value, and a frequency of the main vibration is a feature amount extracted from two of the steering torque detection value and the rotation speed detection value. The amplitude of the main vibration and the frequency of the main vibration respectively indicate an amplitude and a frequency of vibration having the maximum amplitude in a vibration section of each detection value subjected to a short-time Fourier transform.

Here, the short-time Fourier transform is a process of extracting an amplitude of each frequency at each time. Specifically, the short-time Fourier transform is a process of creating frame data obtained by trimming a vibration waveform by a time width t_frame a plurality of times while shifting the time, and then performing fast Fourier transform (FFT) with a window function on each created frame data. By performing such a short-time Fourier transform, three-dimensional data (color map) of [time, frequency, and amplitude] can be obtained.

A frequency resolution df in this case is represented by the following expression, where a sampling time of the response data is ts.

$$df = 1/ts*t\_frame$$

· "Rotation Synchronous Disturbance-Likeness" and "Rotation Synchronous Disturbance Degree"

The rotation synchronous disturbance-likeness and the rotation synchronous disturbance degree are feature amounts extracted from three of the steering torque detection value, the current detection value, and the rotation speed detection value. The rotation synchronous disturbance-likeness is a feature amount used for determining whether or not vibration has a frequency proportional to the speed of the rotating machine (hereinafter, referred to as "rotation synchronous vibration"). The rotation synchronous disturbance degree is a value indicating a proportionality coefficient between the vibration frequency and the speed in a case where it is assumed that the vibration is the rotation synchronous vibration.

A rotation synchronous disturbance-likeness RateN can be calculated, for example, by using a speed $\omega(t)$ at time t and a frequency ft(t) of the main vibration at time t obtained by the short-time Fourier transform. The rotation synchronous disturbance-likeness RateN is defined by a correlation coefficient between ft(t) and $\omega(t)$ at time t around the vibration section. In a case where a value of the rotation synchronous disturbance-likeness RateN is close to 1, a correlation between ft(t) and $\omega(t)$ is high, and it can be determined that the frequency changes according to the speed, so that it can be determined that the vibration is the rotation synchronous disturbance.

In addition, the rotation synchronous disturbance-likeness RateN may be defined as in the following expression by using a variance of ft(t) at time t around the vibration section and a variance of a rotation synchronous disturbance degree Nt(t) that is the proportionality coefficient between ft(t) and $\omega(t)$ without using the correlation coefficient. Here, var in the following expression means a variance value of the number in parentheses.

$$\mathrm{RateN} = \mathrm{var}(\mathrm{ft}(t))/\mathrm{var}(\mathrm{Nt}(t))$$

In a case where the vibration is the rotation synchronous vibration, Nt(t) has a value close to a constant value, and thus the variance is small. In a case where the vibration is vibration having a constant frequency such as oscillation due to stability deterioration, ft(t) has a value close to a constant value, and thus the variance is small. That is, in a case where the vibration is the rotation synchronous vibration, RateN is increased, and in a case where the vibration is the vibration having a constant frequency, RateN is decreased.

· "Peak Amplitude of High Frequency" and "Peak Frequency of High Frequency"

A peak amplitude of a high frequency is a feature amount extracted from two of the steering torque detection value and the current detection value, and a peak frequency of the high frequency is a feature amount extracted from three of the steering torque detection value, the current detection value, and the rotation speed detection value. The peak amplitude of the high frequency and the peak frequency of the high frequency are feature amounts respectively indicating an amplitude and a frequency of vibration having the maximum amplitude among high-frequency components exceeding the frequency threshold f_th3 in data subjected to the short-time Fourier transform, and are extracted together with the time at which the vibration occurred. The peak amplitude of the high frequency is used to determine a magnitude of noise. The peak frequency of the high frequency and the time are used to specify which of a torque sensor and a speed sensor contributes to the noise, by examining a similarity between the current detection value, the steering torque detection value, and the rotation speed detection value.

The feature amount calculation unit 321 extracts the feature amounts described above from the response data by using the amount indicating the feature of the vibration as the feature amount. The feature amount calculation unit 321 outputs the extracted feature amount to the vibration classification unit 322. The vibration classification unit 322 classifies factor candidates of the vibration based on the feature amount output from the feature amount calculation unit 321.

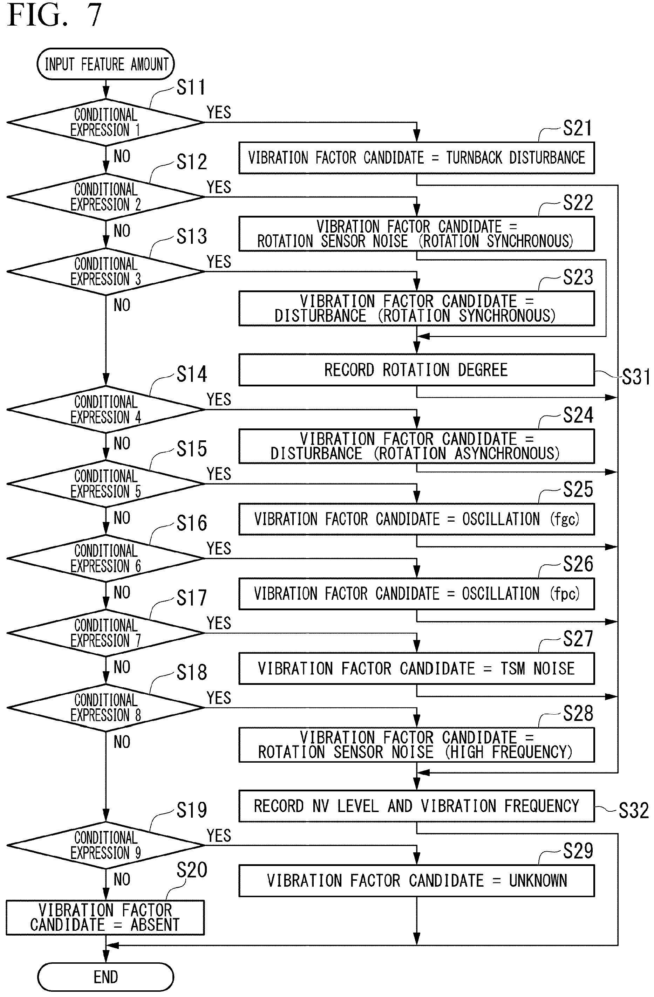

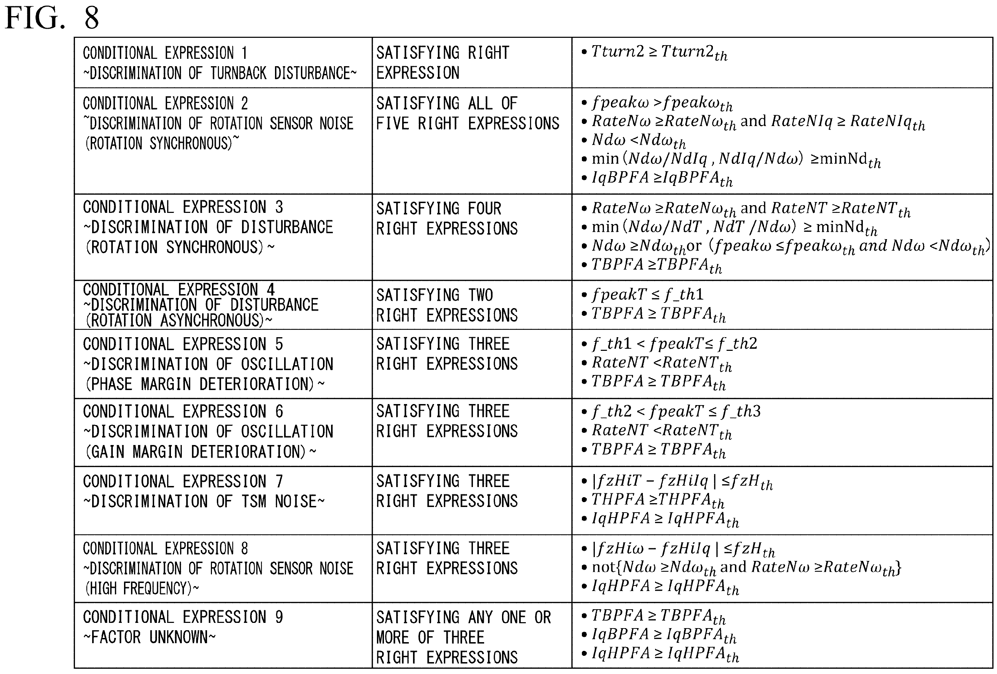

FIG. 7 is a flowchart showing a process performed by the vibration classification unit in the first embodiment of the present disclosure. The process of the flowchart shown in FIG. 7 is performed each time the feature amount is output from the feature amount calculation unit 321. In a case in which the process of the flowchart shown in FIG. 7 is started, the vibration classification unit 322 sequentially determines whether or not "Conditional Expression 1" to "Conditional Expression 9" shown in FIG. 8 are established (steps S11 to S19).

FIG. 8 is a diagram showing conditional expressions used in the process of the vibration classification unit in the first embodiment of the present disclosure. As shown in a left column of FIG. 8, "Conditional Expression 1" is a conditional expression for discriminating turnback disturbance, "Conditional Expression 2" is a conditional expression for discriminating rotation sensor noise (rotation synchronous), and "Conditional Expression 3" is a conditional expression for discriminating disturbance (rotation synchronous). In addition, "Conditional Expression 4" is a conditional expression for discriminating disturbance (rotation asynchronous), "Conditional Expression 5" is a conditional expression for discriminating oscillation (phase margin deterioration), and "Conditional Expression 6" is a conditional expression for discriminating oscillation (gain margin deterioration). In addition, "Conditional Expression 7" is a conditional expression for discriminating TSM noise, "Conditional Expression 8" is a conditional expression for discriminating rotation sensor noise (high frequency), and "Conditional Expression 9" is a conditional expression for discriminating unknown factors.

The specifics of "Conditional Expressions 1 to 9" are specified in center and right columns of FIG. 8. For example, "Conditional Expression 1" specifies that "the right expression (Tturn2 ≥ Tturn2_{th}) is satisfied". In the right column of FIG. 8, a variable with a subscript (th) is a feature amount threshold in each conditional expression. The feature amount threshold may be set to a value that enables classification by referring to past vibration case data or training data.

In a case where it is determined that "Conditional Expression 1" shown in FIG. 8 is established (in a case where a determination result in step S11 is "YES"), the feature amount calculation unit 321 determines that the vibration factor candidate is "turnback disturbance" (step S21). In a case where it is determined that "Conditional Expression 2" shown in FIG. 8 is established (in a case where a determination result in step S12 is "YES"), the feature amount calculation unit 321 determines that the vibration factor candidate is "rotation sensor noise (rotation synchronous)" (step S22). In a case where it is determined that "Conditional Expression 3" shown in FIG. 8 is established (in a case where a determination result in step S13 is "YES"), the feature amount calculation unit 321 determines that the vibration factor candidate is "disturbance (rotation synchronous)" (step S23).

In a case where it is determined that "Conditional Expression 4" shown in FIG. 8 is established (in a case where a determination result in step S14 is "YES"), the feature amount calculation unit 321 determines that the vibration factor candidate is "disturbance (rotation asynchronous)" (step S24). In a case where it is determined that "Conditional Expression 5" shown in FIG. 8 is established (in a case where a determination result in step S15 is "YES"), the feature amount calculation unit 321 determines that the vibration factor candidate is "oscillation (phase margin deterioration)" (step S25). In a case where it is determined that "Conditional Expression 6" shown in FIG. 8 is established (in a case where a determination result in step S16 is "YES"), the feature amount calculation unit 321 determines that the vibration factor candidate is "oscillation (gain margin deterioration)" (step S26).

In a case where it is determined that "Conditional Expression 7" shown in FIG. 8 is established (in a case where a determination result in step S17 is "YES"), the feature amount calculation unit 321 determines that the vibration factor candidate is "TSM noise" (step S27). In a case where it is determined that the "Conditional Expression 8" shown in FIG. 8 is established (in a case where a determination result in step S18 is "YES"), the feature amount calculation unit 321 determines that the vibration factor candidate is "rotation sensor noise (high frequency)" (step S28). In a case where it is determined that "Conditional Expression 9" shown in FIG. 8 is established (in a case where a determination result in step S19 is "YES"), the feature amount calculation unit 321 determines that the vibration factor candidate is "unknown" (step S29).

In a case where the vibration factor candidate is "rotation sensor noise (rotation synchronous)" or "disturbance (rotation synchronous)" (steps S22 and S23), the feature amount calculation unit 321 records a rotation degree (step S31) and records a noise and vibration (NV) level and the vibration frequency (step S32). Contrary to this, in a case where the vibration factor candidates are "turnback disturbance", "disturbance (rotation asynchronous)", "oscillation (phase margin deterioration)", "oscillation (gain margin deterioration)", "TSM noise", and "rotation sensor noise (high frequency)" (steps S21, S24, S25, S26, S27, and S28), the feature amount calculation unit 321 records the NV level and the vibration frequency (step S32).

In a case where all of the conditional expressions 1 to 9 shown in FIG. 8 are not established (in a case where all of the determination results of steps S11 to S19 are "NO"), the feature amount calculation unit 321 determines that there is no vibration factor candidate (Step S20). With the above process, a series of processes shown in FIG. 7 is ended. In a case where the above-described process is ended, the feature amount calculation unit 321 outputs the NV level, the vibration frequency, and the rotation degree (in a case of the rotation synchronous vibration) in addition to the vibration factor candidate.

Examples of a case where Conditional Expressions 1 to 8 are not satisfied include a case where the vibration of the response data is small, a case where the response data does not have a sufficient time width and thus the analysis cannot be performed with high accuracy, and a case where a rotation speed variation of the vibration section is small and thus it is difficult to accurately determine whether the vibration is the rotation synchronous vibration or the rotation asynchronous vibration. For such cases, the processes of steps S19, S20, and S29 are provided. In the case where the vibration factor candidate is "unknown" (step S29), the steering operation is performed again to acquire response data having a sufficient time width or response data in which the rotation speed variation of the vibration section is large, so that the vibration factor candidate can be accurately extracted.

As described above, in the present embodiment, the feature amount related to the vibration or the noise generated during the steering operation of the steering is extracted from the response data obtained when the steering is steered, and the vibration factor candidate, which is a candidate for the vibration factor, is estimated based on the extracted feature amount. Accordingly, it is possible to analyze and estimate the vibration factor without requiring a significant amount of time or a significant amount of effort. Accordingly, the user (tester) himself/herself does not need to analyze the vibration factor separately, and the setting of the controller can be performed according to the vibration factor, so that the number of operations required for the setting of the controller can be reduced.

In addition, in the present embodiment, the response data obtained when the steering is steered is detected by the control device 2 in real time. Therefore, even in a case where a communication speed between the control device 2 and the input/output device 3 via the communication line 4 is slow, the input/output device 3 can obtain the response data including the high-frequency components and can specify the vibration factor with high accuracy.

[Second Embodiment]

The steering measurement device 60 according to the first embodiment described above estimates the vibration factor candidate by extracting the amount indicating the characteristics of the vibration as the feature amount from the response data when the steering is steered. Contrary to this, the steering measurement device 60 according to the present embodiment performs a simulation that simulates the steering operation of the steering, and estimates the vibration factor candidate by extracting a similarity between the vibration that had occurred in the simulation and the vibration caused by an actual steering operation as the feature amount. The input/output device 3 in the present embodiment has the same configuration as the input/output device 3 shown in FIG. 3, but is different in the internal configuration of the vibration factor estimation unit 32.

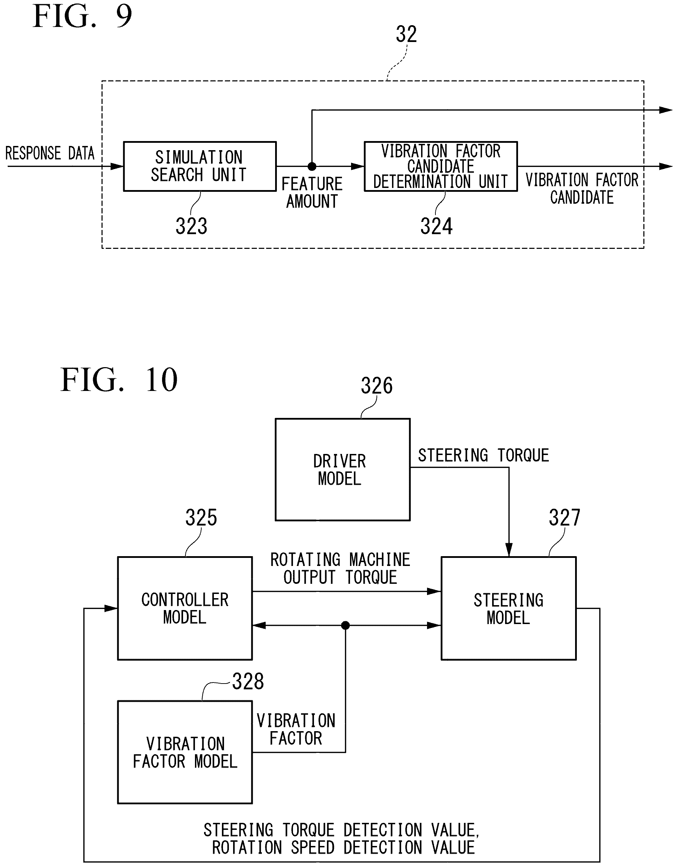

FIG. 9 is a block diagram showing an internal configuration of the vibration factor estimation unit in a second embodiment of the present disclosure. As shown in FIG. 9, the vibration factor estimation unit 32 in the present embodiment includes a simulation search unit 323 and a vibration factor candidate determination unit 324. The simulation search unit 323 simulates the actually performed steering operation on the simulation based on the response data and generates data on the simulation (hereinafter, referred to as "simulation response data") corresponding to the response data. Specifically, the simulation response data is data including an operation torque detection value, a current detection value, and a rotation speed detection value obtained by the simulation.

FIG. 10 is a diagram showing a simulation model used in the second embodiment of the present disclosure. As shown in FIG. 10, the simulation model is constituted by a controller model 325, a driver model 326, a steering model 327, and a vibration factor model 328. The controller model 325 is a model that implements the same algorithm as a control algorithm implemented in the control device 2.

The driver model 326 is a model that simulates the driver. Specifically, the model is a model that calculates an angle of the steering wheel 51 from the rotation speed of the rotating machine 1, which is one of the response data received from the control device 2, and generates a steering torque so that the steering wheel angle on the simulation matches a steering wheel angle of the actual steering operation. The driver model 326 may be, for example, a proportional-integral-derivative (PID) control model corresponding to a difference between the steering wheel angle of the actual steering operation and the steering wheel angle on the simulation, or may use another known driver model.

The steering model 327 is a model in which a steering device is physically modeled and mechanical characteristics of the steering device are reflected. Specifically, the steering device is represented by a two-inertia system model, and is a model that represents an inertia and a viscosity of the steering wheel 51, a viscosity and a stiffness of the torsion bar, a road surface viscosity and a road surface stiffness caused by a force generated between a tire and a road surface, an inertia of the rotating machine 1, and mechanism friction of the steering device. These mechanical characteristics are identified and set in advance. As an identification method, as described in Patent Document 1, identification may be performed from the response data after the excitation command is applied to the rotating machine 1, or identification may be performed by another known method.

The vibration factor model 328 is a model for reproducing vibration that has occurred in the response data. For example, in a case where vibration having a frequency proportional to the speed of the rotating machine 1 is reproduced, the vibration factor model 328 generates a torque disturbance proportional to the speed of the rotating machine on the simulation. By inputting this torque disturbance to the steering model 327, it is possible to obtain simulation response data for reproducing the vibration that had occurred in the response data.

In addition, in a case of reproducing vibration caused by an insufficient stability margin of the controller, the vibration factor model 328 uses a method of deteriorating a phase margin by setting a delay time to a controller input value or a controller output value in the simulation, or a method of deteriorating a gain margin using a filter that increases a gain of a high frequency in the controller output value. By using such a method, it is possible to obtain simulation response data that reproduces the vibration that had occurred in the response data. In addition, other factors can also be incorporated as long as factors of vibration caused during the steering operation of the steering are factors that can be incorporated as the vibration factor model of the simulation.

Next, a method of evaluating the similarity between the response data and the simulation response data will be described. A dynamic time warping method (hereinafter, referred to as "DTW") is used as the method of evaluating the similarity. In order to use this method, the vibration section included in the response data and a vibration section of the simulation response data corresponding to the section are extracted, and pre-processed to remove an offset component of each vibration section.

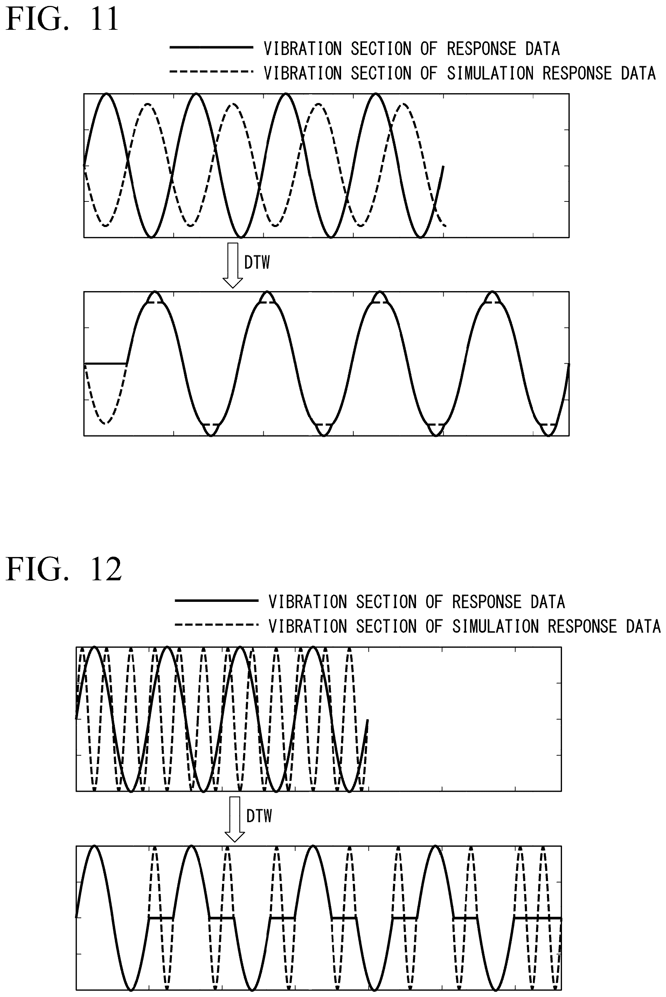

FIG. 11 is a diagram for describing DTW, which is a reproduction determination method in the second embodiment of the present disclosure. After pre-processing the vibration section of each of the response data and the simulation response data, the vibration sections are stretched and contracted (warped) by DTW so that the vibration sections of the response data and the simulation response data are well matched with each other as in an example shown in FIG. 11. Then, a difference between the two vibration sections that are stretched and contracted is taken, and the sum of absolute values of the differences is calculated to calculate a distance indicating the similarity between the two vibration sections. This distance can be used as a reproduction determination value of vibration as a feature amount. In the following, this distance is referred to as a "DTW distance". The smaller the DTW distance is, the higher the similarity is.

In DTW, by stretching and contracting the vibration sections, even in a case where there is a phase difference between the two vibration sections, the phase difference can be absorbed and then the difference can be taken, so that the similarity between the vibration sections can be appropriately measured. Furthermore, even in a case where there is a slight shift in the frequency of the vibration between the actual machine and the simulation due to an error of the simulation model or a simulation parameter, it is possible to measure the similarity by appropriately absorbing the shift by the stretching and contraction of the vibration sections.

FIG. 12 is a diagram for describing a method of preventing erroneous determination by using DTW, which is the reproduction determination method in the second embodiment of the present disclosure. In a case where there is a significant difference in the frequency of the vibration between the actual machine and the simulation, it is necessary to determine that the vibration of the actual machine and the vibration of the simulation are different so that erroneous determination does not occur. In the present disclosure, time widths of two torque vibration waveforms to be extracted in measuring the similarity are set to be equal to each other, so that erroneous determination is prevented.

That is, when the time widths of the two torque vibration waveforms to be extracted in measuring the similarity are set to be equal to each other, the frequency of the vibration in the vibration section is shifted as shown in FIG. 12. Therefore, it can be determined that the DTW distance is not reduced even in a case where the data is stretched and contracted by DTW, and the similarity between the response data and the simulation response data is low. In addition, by limiting the stretching and contraction during the DTW calculation by a known method, the amount of the frequency shift that can be absorbed may be limited. As described above, by using DTW, it is possible to appropriately evaluate the similarity between the vibration sections of the response data and the simulation response data.

Next, a vibration factor search method for appropriately reproducing actual vibration by a simulation using the method of evaluating the similarity between two vibrations by DTW will be described. In the evaluation of the similarity between the vibration of the response data and the vibration of the simulation response data, it is necessary to appropriately set, in addition to the type of the vibration factor set in the vibration factor model on the simulation, a magnitude of an influence of the vibration factor.

For example, a case where the vibration of the response data is the rotation synchronous vibration due to the rotation synchronous disturbance is considered. In this case, even in a case where the rotation synchronous disturbance is applied to the vibration factor model of the simulation, when a magnitude of the rotation synchronous disturbance on the simulation is not appropriate, there will be a difference in amplitude between the vibration of the response data and the vibration of the simulation response data. This may lead to an increase in the DTW distance and to erroneous vibration factor estimation. Therefore, by performing an optimization search using the magnitude of the influence of the vibration factor on the simulation as a design variable and the DTW distance as an objective function, it is possible to obtain the magnitude of the vibration factor suitable for reproducing the vibration of the response data.

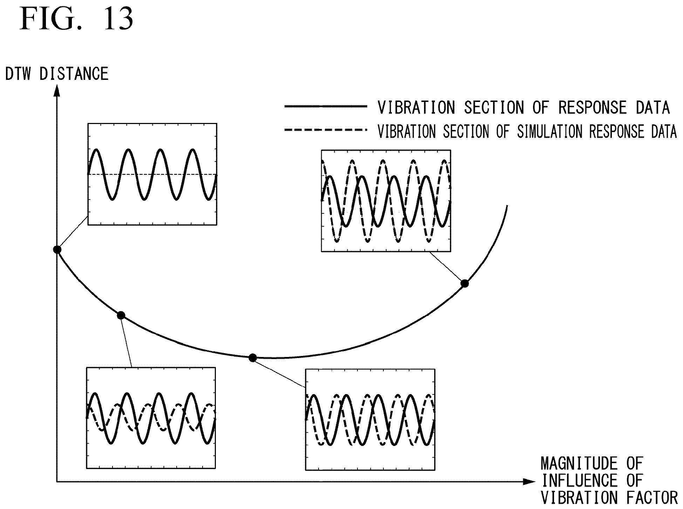

FIG. 13 is a diagram showing a relationship between the DTW distance and the magnitude of the influence of the vibration factor in the second embodiment of the present disclosure. As shown in FIG. 13, in a case where the magnitude of the influence of the vibration factor on the simulation is either excessively small or excessively large, the DTW distance increases. Contrary to this, when the amplitudes of the vibration of the response data and the vibration of the simulation response data are close to each other, the DTW distance is also small, and it can be determined that the magnitude of the influence of the vibration factor at that time is appropriate. Therefore, by using the magnitude of the influence of the vibration factor on the simulation as the design variable and the DTW distance as the objective function and performing optimization in which the simulation is repeated each time to search for the design variable so that the objective function is minimized, it is possible to calculate an appropriate magnitude of the influence of the vibration factor. It should be noted that a known method may be used as an optimization method used for the search.

As described above, by searching for the magnitude of the influence of the vibration factor so that the DTW distance becomes small, it is possible to appropriately reproduce the actual vibration by the simulation. It should be noted that, for all the vibration factors set in the vibration factor model, the search may be performed separately for each vibration factor, or a plurality of vibration factors may be combined to be searched at the same time. In that case as well, the objective function in the search is not changed and only the number of design variables is increased, a known optimization method for searching for a plurality of design variables may be used.

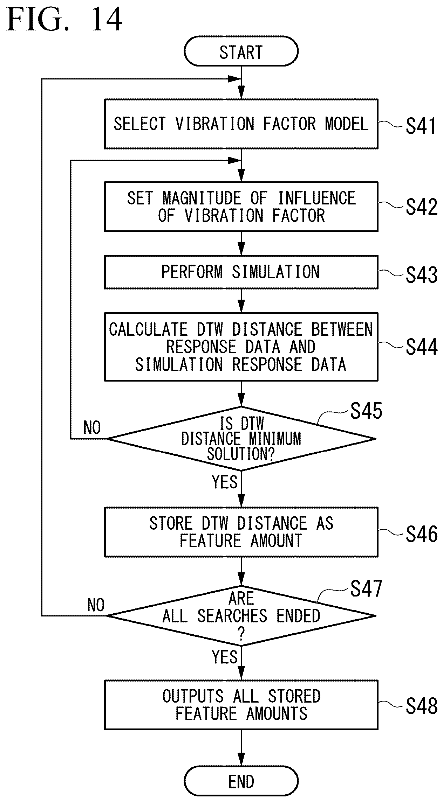

FIG. 14 is a flowchart showing a process performed by the simulation search unit in the second embodiment of the present disclosure. In a case where the process of the flowchart shown in FIG. 14 is started, the simulation search unit 323 selects the vibration factor model (step S41), sets the magnitude of the influence of the vibration factor (step S42), and perform the simulation (step S43). Next, the simulation search unit 323 calculates the DTW distance between the response data and the simulation response data (step S44).

Then, the simulation search unit 323 determines whether or not the DTW distance is a minimum solution (step S45). In a case where it is determined that the DTW distance is not the minimum solution (in a case where a determination result in step S45 is "NO"), the simulation search unit 323 returns to the process of step S42. Contrary to this, in a case where it is determined that the DTW distance is the minimum solution (in a case where the determination result in step S45 is "YES"), the simulation search unit 323 stores the DTW distance as the feature amount (step S46).

Subsequently, the simulation search unit 323 determines whether or not all the searches are ended (step S47). In a case where it is determined that not all the searches are ended (in a case where a determination result in step S47 is "NO"), the simulation search unit 323 returns to the process in step S41. Contrary to this, in a case where it is determined that all the searches are ended (in a case where the determination result in step S47 is "YES"), the simulation search unit 323 outputs all the stored feature amounts (step S48).

As described above, the simulation search unit 323 performs a process of separately searching for the magnitude of the influence of each vibration factor set in the vibration factor model or sequentially searching for a combination of a plurality of vibration factors and storing the DTW distance that is minimized by the optimization method. The simulation search unit 323 repeats this process until all the searches are ended. In a case where all the searches are ended, the simulation search unit 323 outputs the DTW distance, which is each search result, to the vibration factor candidate determination unit 324 as the feature amount.

The vibration factor candidate determination unit 324 determines the vibration factor candidate based on the DTW distance output as the feature amount from the simulation search unit 323. In the reproduction determination of the vibration, a threshold is set for the DTW distance, and when the DTW distance obtained by each search is equal to or less than the threshold, it can be determined that the vibration caused by the steering operation of the steering can be reproduced by the vibration factor set in the search. In a case where there are two or more searches that can reproduce the vibration caused by the steering operation of the steering, it can be determined that the one having a smaller DTW distance has higher reproducibility. Therefore, the rank of the vibration factor candidate may be determined and presented in descending order of the DTW distance. In addition, in a case where the vibration is reproduced by the combination of the plurality of vibration factors, the combination of the plurality of vibration factors may be used as the vibration factor candidate.

In addition, there are cases where the vibration cannot be reproduced due to an insufficient time width in the response data, inaccurate analysis, and the like. In addition, there are cases where there is no difference in the DTW distance between the search for the factor of the rotation synchronous vibration and the search for the factor of the rotation asynchronous vibration due to a small rotation speed variation in the vibration section and the vibration factor candidates cannot be ranked. In such cases, the extraction of the vibration factor candidate can be performed with high accuracy by performing the steering operation again and acquiring response data having a sufficient time width or response data in which the rotation speed variation of the vibration section is large.

In addition, the estimation of the vibration factor performed in the present embodiment may be performed together with the estimation of the vibration factor described in the first embodiment. In a case where the estimation of the vibration factor performed in the present embodiment is performed together with the estimation of the vibration factor described in the first embodiment, the estimation may be performed by each method, and in a case where the estimated vibration factors are the same, the vibration factor may be output. In a case where the estimated vibration factors are different, either the estimated vibration factor may be preferentially output based on each feature amount of each method.

As described above, according to the present embodiment, since the vibration factor search using the simulation is performed and whether or not the vibration can be reproduced is determined using the DTW distance as the feature amount, the vibration factor can be estimated with high accuracy. Therefore, it is possible to estimate the vibration factor each time while conducting a steering test for the steering without requiring analysis of the vibration factor by the user (tester). Accordingly, there is an effect that the number of operations required for the vibration factor analysis by the user can be reduced and the user can set the control device 2 according to the vibration factor.

[Third Embodiment]

In the steering measurement devices 60 according to the first and second embodiments described above, the user (tester) sets the controller in consideration of a target characteristic of the controller based on the estimated vibration factor candidate. Contrary to this, the steering measurement device 60 according to the present embodiment automatically calculates a target characteristic to suppress the vibration based on the estimated vibration factor candidate and outputs the target characteristic.

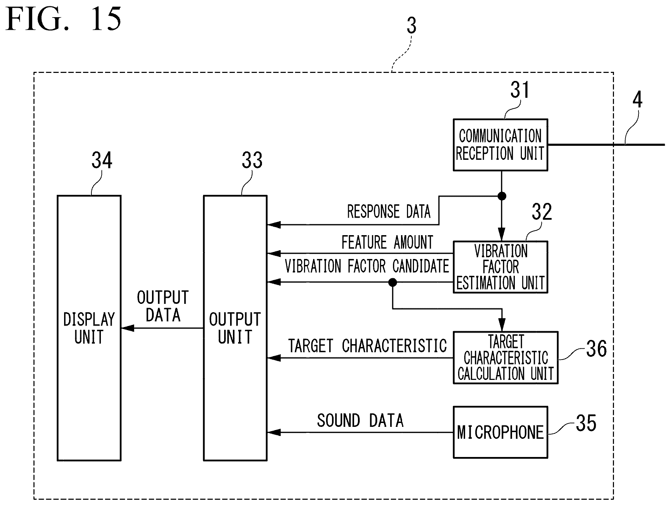

FIG. 15 is a block diagram showing a configuration of a main part of an input/output device provided in the steering measurement device according to a third embodiment of the present disclosure. As shown in FIG. 15, the input/output device 3 in the present embodiment has a configuration in which a target characteristic calculation unit 36 is added to the input/output device 3 shown in FIG. 3. The target characteristic calculation unit 36 calculates a target characteristic of the control device 2 based on the vibration factor candidate estimated by the vibration factor estimation unit 32.

Specifically, the target characteristic calculation unit 36 sets, for any one or more of a torque controller characteristic, an angle controller characteristic, an open loop characteristic, a sensitivity function, and a disturbance transmission characteristic, which are characteristics of the controller, an evaluation function based on a target value in a designated frequency band. Then, the target characteristic calculation unit 36 calculates the target characteristic that minimizes the evaluation function through an optimization calculation. As the optimization calculation, a known calculation method may be used.

Here, in a case where the vibration factor candidate is oscillation due to an insufficient gain margin, the target characteristic calculation unit 36 sets the evaluation function in a state where a target value of the gain margin obtained from the open loop characteristic is increased, and obtains the target characteristic in which the gain margin is increased by the optimization calculation. In a case where the vibration factor candidate is oscillation due to an insufficient phase margin, the target characteristic calculation unit 36 sets, as in the case of the insufficient gain margin, the evaluation function in which a target value of the phase margin obtained from the open loop characteristic is increased, and obtains the target characteristic in which the phase margin is increased by the optimization calculation. It should be noted that the same effect can be obtained by setting the evaluation function by decreasing a gain target value near an oscillation frequency of the sensitivity function without discriminating between the insufficient gain margin and the insufficient phase margin and obtaining the target characteristic through the optimization calculation.

In a case where vibration due to disturbances such as the turnback ripple, road surface disturbances, and the rotation synchronous disturbance is a problem, the target characteristic calculation unit 36 sets the evaluation function by decreasing the gain target value of the disturbance transmission characteristic at the vibration frequency and performs the optimization calculation. Accordingly, it is possible to obtain a target characteristic in which disturbance suppression performance is enhanced. In addition, in a case where high-frequency noise generated from the rotating machine due to a sensor error is a problem, the target characteristic calculation unit 36 sets the evaluation function by decreasing the gain target value of the disturbance transmission characteristic at the vibration frequency or by decreasing the gain target value of the torque controller characteristic or the angle controller characteristic at the vibration frequency, and performs the optimization calculation. Accordingly, it is possible to obtain a target characteristic in which the high-frequency noise generated from the rotating machine due to the sensor error is suppressed.

The output unit 33 outputs, as output data, two or more pieces of data including at least the vibration factor candidate and the target characteristic among the response data, the vibration factor candidate and the feature amount, the sound data, and the target characteristic. The output data output from the output unit 33 may be stored in a form that can be checked by the user (for example, text form) or may be output to the outside.

As described above, in the present embodiment, the optimization calculation is performed by setting the evaluation function based on the target value in the designated frequency band for any one or more of the torque controller characteristic, the angle controller characteristic, the open loop characteristic, the sensitivity function, and the disturbance transmission characteristic, which are the characteristics of the controller. Accordingly, it is possible to obtain a target characteristic in which the influence of the vibration factor candidate is appropriately reduced. Therefore, the user does not need to examine the target characteristic corresponding to the vibration factor candidate by himself or herself, and the user can set the controller according to the target characteristic obtained by the optimization calculation. As a result, it is possible to set the controller to suppress the vibration caused by the steering operation of the steering while reducing the number of operations required for the user to analyze the vibration factors and to examine the target characteristics of the controller.

[Fourth Embodiment]

The steering measurement device 60 according to the third embodiment described above automatically performs all the operations from the selection of the vibration factor candidate to the target characteristic calculation. Contrary to this, the steering measurement device 60 according to the present embodiment allows the user (tester) to select the vibration factor candidate and to adjust the target characteristic.

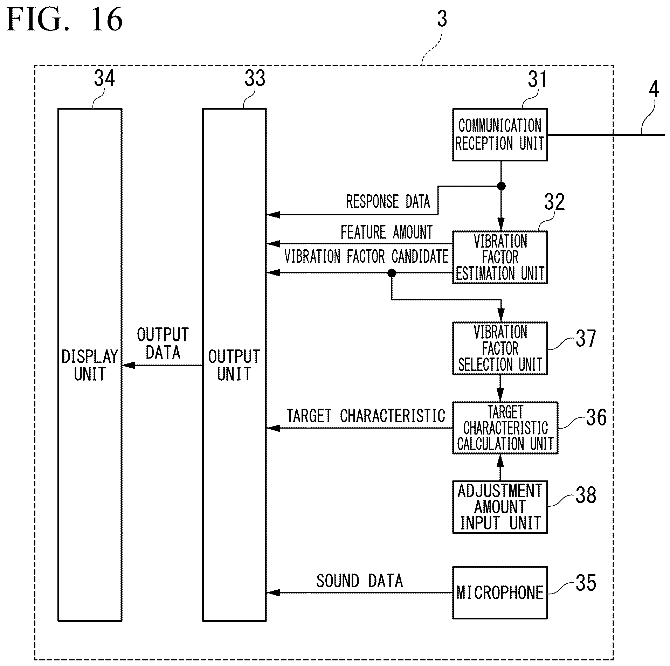

FIG. 16 is a block diagram showing a configuration of a main part of an input/output device provided in the steering measurement device according to a fourth embodiment of the present disclosure. As shown in FIG. 16, the input/output device 3 according to the present embodiment has a configuration in which a vibration factor selection unit 37 and an adjustment amount input unit 38 are added to the input/output device 3 shown in FIG. 15. In a case where there are a plurality of vibration factor candidates estimated by the vibration factor estimation unit 32, the vibration factor selection unit 37 selects a specific vibration factor based on an instruction of the user and outputs the selected specific vibration factor to the target characteristic calculation unit 36.

For example, a case where there are a large influence and a small influence among the plurality of vibration factor candidates estimated by the vibration factor estimation unit 32 will be considered. In such a case, when the user instructs the vibration factor selection unit 37 to select only the vibration factor candidate having a large influence, only the vibration factor candidate having a large influence is selected and output to the target characteristic calculation unit 36. Accordingly, it is possible to obtain the target characteristic using only the vibration factor candidate having a large influence among the plurality of vibration factor candidates estimated by the vibration factor estimation unit 32.

The adjustment amount input unit 38 inputs an adjustment amount of the target characteristic. Specifically, the adjustment amount input unit 38 inputs the adjustment amount when the target characteristic of the control device 2 is calculated by the target characteristic calculation unit 36 based on the vibration factor candidate estimated by the vibration factor estimation unit 32. In the present embodiment, the target characteristic is calculated by the target characteristic calculation unit 36 based on the vibration factor candidate selected by the vibration factor selection unit 37 and the adjustment amount input by the adjustment amount input unit 38. Therefore, by providing the adjustment amount input unit 38, the user can perform the adjustment to set a desired target characteristic after considering the magnitude of the influence of the vibration factor designated by the vibration factor selection unit 37.

The adjustment amount input by the adjustment amount input unit 38 may not necessarily be only the adjustment amount for suppressing the vibration, but may also be an adjustment amount intended for other purposes than vibration suppression, such as securing comfortable steerability for the steering. For example, the adjustment amount may include an adjustment amount for the target value of the sensitivity function or the open loop characteristic to suppress vibration due to stability deterioration and an adjustment amount for the target value of the torque controller characteristic to secure steering responsiveness. As a matter of course, the adjustment amount is not limited to the above examples, and may also include an adjustment amount for obtaining desired characteristics of the user, such as an adjustment amount for a target value of the disturbance transmission characteristic to improve disturbance suppression performance or an adjustment amount for a target value of the angle controller characteristic to adjust a steering viscosity feeling.

In addition, in a case of designating the adjustment amount to be input to the adjustment amount input unit 38, the user can designate a specific frequency or a specific frequency band, or can apply weights to a plurality of target values. By performing such an operation, it is possible to further improve the characteristics that the user prioritizes, and it is possible to easily obtain the target characteristics desired by the user.

As described above, in the present embodiment, the vibration factor selection unit 37 is provided to select the vibration factor candidate estimated by the vibration factor estimation unit 32 in response to an instruction of the user. In addition, in the present embodiment, the adjustment amount input unit 38 is provided so that the adjustment amount can be input in a case of calculating the target characteristic. Accordingly, it is possible to adjust the target characteristics to reflect a setting policy of the user.

Although the embodiments of the present disclosure have been described above, the present disclosure is not limited to the above-described embodiments, and may be modified without departing from the scope of the present invention, which is defined by the appended claims. For example, the electric power steering device 50 described in the above-described embodiment is of a rack-and-pinion type, but may be of a type other than the rack-and-pinion type.

Each of the configurations (the control device 2 and the input/output device 3) provided in the steering measurement device 60 described above has a computer system therein. Moreover, a program for implementing functions of each configuration provided by the steering measurement device 60 described above may be recorded on a computer-readable recording medium, and by having the computer system read and execute the program recorded on this recording medium, processing in each configuration provided in the steering measurement device 60 described above may be performed. Here, "having the computer system read and execute the program recorded on the recording medium" includes installing the program on the computer system. Here, the "computer system" mentioned here includes an operating system (OS) and hardware such as a peripheral device.

In addition, the "computer system" may include a plurality of computer devices connected via a network including a communication line such as the Internet, a WAN, a LAN, and a dedicated line. In addition, the "computer-readable recording medium" refers to a portable medium such as a flexible disk, a magneto-optical disk, a ROM, or a CD-ROM, and a storage device such as a hard disk built in a computer system. As described above, the recording medium on which the program is stored may be a non-transitory recording medium such as a CD-ROM.

In addition, the recording medium also includes an internal or external recording medium that is accessible by a distribution server to distribute the program. In addition, a configuration may be adopted in which the program is divided into a plurality of programs and the plurality of programs are downloaded at different times and then combined in each configuration provided by the steering measurement device 60, or the distribution server that distributes each of the divided programs may be different. Furthermore, the "computer-readable recording medium" also includes a medium that holds the program for a certain period of time, such as a volatile memory (RAM) inside the computer system that serves as a server or a client in a case where the program is transmitted via a network. In addition, the program may be a program for implementing some of the functions described above. Furthermore, the program may be a so-called difference file (difference program) capable of implementing the functions described above in combination with a program that has already been recorded on the computer system.

Reference Signs List

    1: Rotating machine
    2: Control device
    3: Input/output device
    32: Vibration factor estimation unit
    33: Output unit
    34: Display unit
    35: Microphone
    36: Target characteristic calculation unit
    37: Vibration factor selection unit
    38: Adjustment amount input unit
    50: Electric power steering device

**Claims**

1. An input/output device (3) comprising:

a vibration factor estimation unit (32) configured to be connected for communication to a control device (2) for controlling a rotating machine provided in an electric power steering device provided in a vehicle to generate a steering assist force for a steering, to acquire, during a steering operation of the steering, response data indicating a response to a steering operation of the electric power steering device detected by the control device (2), to extract a feature amount related to a vibration or a noise generated during the steering operation of the steering from the response data, and characterized to estimate a vibration factor candidate, which is a candidate for a vibration factor, based on the feature amount; and
an output unit (33) configured to output the vibration factor candidate.

2. The input/output device (3) according to Claim 1, further comprising:

a target characteristic calculation unit (36) configured to calculate a target characteristic of the control device (2) based on the vibration factor candidate.

3. The input/output device (3) according to Claim 2, further comprising:

a vibration factor selection unit (37) configured to select the vibration factor candidate; and
an adjustment amount input unit (38) configured to input an adjustment amount of the target characteristic,
wherein the target characteristic calculation unit (36) calculates the target characteristic based on the vibration factor candidate selected by the vibration factor selection unit (37) and the adjustment amount input by the adjustment amount input unit (38).

4. The input/output device (3) according to Claim 2 or 3, wherein the target characteristic calculation unit (36) calculates the target characteristic based on any one or more of a torque controller characteristic, an angle controller characteristic, an open loop characteristic, a sensitivity function, and a disturbance transmission characteristic of the control device (2), and the vibration factor candidate.

5. The input/output device (3) according to any one of Claims 1 to 4,
wherein the response data includes at least one of a steering torque applied to the steering, a rotation speed of the rotating machine, and a detection current.

6. The input/output device (3) according to any one of Claims 1 to 5, further comprising:
a voice detector configured to detect a sound generated inside the vehicle during the steering operation of the steering, and to output the detected sound as voice data.

7. The input/output device (3) according to Claim 6,

wherein the output unit (33) outputs one or more of the vibration factor, the response data, the sound data, and the feature amount, including the vibration factor, in any of a numerical form, a text form, or a figure form, and
the input/output device (3) further comprises a display unit configured to display an output result of the output unit (33).

8. The input/output device (3) according to any one of Claims 1 to 7,
wherein the feature amount includes an amount indicating any one or more of an amplitude of the vibration, a frequency of the vibration, a rotation synchronous disturbance-likeness, and a rotation synchronous disturbance degree of the response data.

9. The input/output device (3) according to any one of Claims 1 to 8,
wherein the feature amount includes an amount indicating a similarity between the response data and simulation response data obtained by performing a simulation of the vibration.

10. A steering measurement device comprising:

the input/output device (3) according to any one of Claims 1 to 9; and
a control device (2) configured to be connected for communication to the input/output device (3) and to control a rotating machine provided in an electric power steering device for generating a steering assist force for a steering provided in a vehicle,
wherein the control device (2) transmits a response of the electric power steering device detected when the steering is steered, to the input/output device (3) as the response data.

**Patentansprüche**

1. Eine Eingabe-/Ausgabevorrichtung (3), umfassend:

eine Schwingungsfaktor-Schätzeinheit (32), die so konfiguriert ist, dass sie zur Kommunikation mit einer Steuervorrichtung (2) verbunden ist, um eine rotierende Maschine zu steuern, die in einer in einem Fahrzeug vorgesehenen elektrischen Servolenkungsvorrichtung vorgesehen ist, um eine Lenkunterstützungskraft für eine Lenkung zu erzeugen, um während eines Lenkvorgangs der Lenkung Antwortdaten zu erfassen, die eine Antwort auf einen Lenkvorgang der elektrischen Servolenkungsvorrichtung anzeigen, der von der Steuervorrichtung (2) erfasst wird, um aus den Reaktionsdaten einen Merkmalsbetrag zu extrahieren, der sich auf eine während des Lenkvorgangs der Lenkung erzeugte Schwingung oder ein Geräusch bezieht, und gekennzeichnet auf der Grundlage des Merkmalsbetrags einen Schwingungsfaktorkandidaten zu schätzen, der ein Kandidat für einen Schwingungsfaktor ist; und
eine Ausgabeeinheit (33), die so konfiguriert ist, dass sie den Schwingungsfaktorkandidaten ausgibt.

2. Eingabe-/Ausgabevorrichtung (3) gemäß Anspruch 1, die ferner umfasst:
eine Zielcharakteristik-Berechnungseinheit (36), die so konfiguriert ist, dass sie eine Zielcharakteristik der Steuervorrichtung (2) auf der Grundlage des Schwingungsfaktorkandidaten berechnet.

3. Eingabe-/Ausgabevorrichtung (3) gemäß Anspruch 2, die ferner umfasst:

eine Schwingungsfaktor-Auswahleinheit (37), die so konfiguriert ist, dass sie den Schwingungsfaktorkandidaten auswählt; und
eine Einstellbetrag-Eingabeeinheit (38), die so konfiguriert ist, dass sie einen Einstellbetrag der Zielcharakteristik eingibt,
wobei die Zielcharakteristik-Berechnungseinheit (36) die Zielcharakteristik auf der Grundlage des von der Schwingungsfaktor-Auswahleinheit (37) ausgewählten Schwingungsfaktorkandidaten und des von der Einstellbetrag-Eingabeeinheit (38) eingegebenen Einstellbetrags berechnet.

4. Eingabe-/Ausgabevorrichtung (3) gemäß Anspruch 2 oder 3,
wobei die Zielcharakteristik-Berechnungseinheit (36) die Zielcharakteristik auf der Grundlage einer oder mehrerer der folgenden Eigenschaften berechnet: einer Drehmomentsteuereinheitcharakteristik, einer Winkelsteuereinheitcharakteristik, einer Open-Loop-Charakteristik, einer Empfindlichkeitsfunktion und einer Störungsübertragungs-Charakteristik der Steuervorrichtung (2) und des Schwingungsfaktorkandidaten.

5. Eingabe-/Ausgabevorrichtung (3) gemäß einem der Ansprüche 1 bis 4,
wobei die Antwortdaten mindestens eines von einem auf die Lenkung ausgeübten Lenkdrehmoment, einer Drehzahl der rotierenden Maschine und einem Erkennungsstrom umfassen.

6. Eingabe-/Ausgabevorrichtung (3) gemäß einem der Ansprüche 1 bis 5, die ferner umfasst:
einen Sprachdetektor, der so konfiguriert ist, dass er einen während des Lenkvorgangs der Lenkung im Fahrzeuginneren erzeugten Ton erfasst und den erfassten Ton als Sprachdaten ausgibt.

7. Eingabe-/Ausgabevorrichtung (3) gemäß Anspruch 6,

wobei die Ausgabeeinheit (33) einen oder mehrere der folgenden Werte ausgibt: den Schwingungsfaktor, die Antwortdaten, die Tondaten und den Merkmalsbetrag, einschließlich des Schwingungsfaktors, in numerischer Form, Textform oder Bildform, und
die Eingabe-/Ausgabevorrichtung (3) ferner eine Anzeigeeinheit umfasst, die so konfiguriert ist, dass sie ein Ausgabeergebnis der Ausgabeeinheit (33) anzeigt.

8. Eingabe-/Ausgabevorrichtung (3) gemäß einem der Ansprüche 1 bis 7,
wobei der Merkmalsbetrag einen Betrag umfasst, die eine oder mehrere der folgenden Größen angibt: eine Amplitude der Schwingung, eine Frequenz der Schwingung, eine rotationssynchrone Störungsähnlichkeit und einen rotationssynchronen Störungsgrad der Antwortdaten.

9. Eingabe-/Ausgabevorrichtung (3) gemäß einem der Ansprüche 1 bis 8,
wobei der Merkmalsbetrag einen Betrag umfasst, der eine Ähnlichkeit zwischen den Antwortdaten und den Simulationsantwortdaten angibt, die durch Ausführen einer Simulation der Schwingung erhalten werden.

10. Eine Lenkmessvorrichtung, umfassend:

die Eingabe-/Ausgabevorrichtung (3) gemäß einem der Ansprüche 1 bis 9; und
eine Steuervorrichtung (2), die so konfiguriert ist, dass sie zur Kommunikation mit der Eingabe-/Ausgabevorrichtung (3) verbunden ist und eine in einer elektrischen Servolenkungsvorrichtung vorgesehene rotierende Maschine steuert, um eine Lenkunterstützungskraft für eine in einem Fahrzeug vorgesehene Lenkung zu erzeugen,
wobei die Steuervorrichtung (2) eine bei dem Lenken der Lenkung erfasste Reaktion der elektrischen Servolenkungsvorrichtung als Reaktionsdaten an die Eingabe-/Ausgabevorrichtung (3) überträgt.

## Revendications

1. Dispositif d'entrée/sortie (3) comprenant :

une unité d'estimation de facteur de vibration (32) configurée pour être connectée pour communiquer avec un dispositif de commande (2) pour commander une machine rotative prévue dans un dispositif de direction assistée électrique prévu dans un véhicule afin de générer une force d'assistance de direction pour une direction, pour acquérir, pendant une opération de direction de la direction, des données de réponse indiquant une réponse à une opération de direction du dispositif de direction assistée électrique détectée par le dispositif de commande (2), pour extraire une quantité de caractéristique liée à une vibration ou à un bruit généré pendant l'opération de direction de la direction à partir des données de réponse, et caractérisé pour estimer un candidat de facteur de vibration, qui est un candidat pour un facteur de vibration, sur la base de la quantité de caractéristique ; et
une unité de sortie (33) configurée pour émettre en sortie le candidat de facteur de vibration.

2. Dispositif d'entrée/sortie (3) selon la revendication 1, comprenant en outre :
une unité de calcul de caractéristique cible (36) configurée pour calculer une caractéristique cible du dispositif de commande (2) sur la base du candidat de facteur de vibration.

3. Dispositif d'entrée/sortie (3) selon la revendication 2, comprenant en outre :

une unité de sélection de facteur de vibration (37) configurée pour sélectionner le candidat de facteur de vibration ; et
une unité d'entrée de quantité d'ajustement (38) configurée pour entrer une quantité d'ajustement de la caractéristique cible,
dans lequel l'unité de calcul de caractéristique cible (36) calcule la caractéristique cible sur la base du candidat de facteur de vibration sélectionné par l'unité de sélection de facteur de vibration (37) et de la quantité d'ajustement entrée par l'unité d'entrée de quantité d'ajustement (38).

4. Dispositif d'entrée/sortie (3) selon la revendication 2 ou 3,
dans lequel l'unité de calcul de caractéristique cible (36) calcule la caractéristique cible sur la base d'une quelconque ou plusieurs caractéristiques parmi une caractéristique de contrôleur de couple, une caractéristique de contrôleur d'angle, une caractéristique en boucle ouverte, une fonction de sensibilité et une caractéristique de transmission de perturbation du dispositif de commande (2), et du candidat de facteur de vibration.

5. Dispositif d'entrée/sortie (3) selon l'une quelconque des revendications 1 à 4,
dans lequel les données de réponse comprennent au moins un parmi un couple de direction appliqué à la direction, une vitesse de rotation de la machine rotative et un courant de détection.

6. Dispositif d'entrée/sortie (3) selon l'une quelconque des revendications 1 à 5, comprenant en outre :
un détecteur de voix configuré pour détecter un son généré à l'intérieur du véhicule pendant l'opération de direction de la direction, et pour émettre en sortie le son détecté sous forme de données vocales.

**7.** Dispositif d'entrée/sortie (3) selon la revendication 6,

dans lequel l'unité de sortie (33) émet en sortie un ou plusieurs parmi le facteur de vibration, les données de réponse, les données sonores et la quantité de caractéristique, incluant le facteur de vibration, sous une quelconque forme numérique, une forme textuelle ou une forme graphique, et

le dispositif d'entrée/sortie (3) comprend en outre une unité d'affichage configurée pour afficher un résultat de sortie de l'unité de sortie (33).

**8.** Dispositif d'entrée/sortie (3) selon l'une quelconque des revendications 1 à 7,
dans lequel la quantité de caractéristique comprend une quantité indiquant un ou plusieurs parmi une amplitude de la vibration, une fréquence de la vibration, une similitude de perturbation synchrone de rotation et un degré de perturbation synchrone de rotation des données de réponse.

**9.** Dispositif d'entrée/sortie (3) selon l'une quelconque des revendications 1 à 8,
dans lequel la quantité de caractéristique comprend une quantité indiquant une similitude entre les données de réponse et des données de réponse de simulation obtenues en effectuant une simulation de la vibration.

**10.** Dispositif de mesure de direction comprenant :

le dispositif d'entrée/sortie (3) selon l'une quelconque des revendications 1 à 9 ; et

un dispositif de commande (2) configuré pour être connecté pour communiquer avec le dispositif d'entrée/sortie (3) et pour commander une machine rotative prévue dans un dispositif de direction assistée électrique pour générer une force d'assistance de direction pour une direction prévue dans un véhicule,

dans lequel le dispositif de commande (2) transmet une réponse du dispositif de direction assistée électrique détectée lorsque la direction est actionnée, au dispositif d'entrée/sortie (3) en tant que données de réponse.

FIG. 1

EP 4 516 634 B1

FIG. 2

FIG. 3

FIG. 4

# FIG. 5

| | TURNBACK RIPPLE | AMPLITUDE OF MAIN VIBRATION | FREQUENCY OF MAIN VIBRATION | ROTATION SYNCHRONOUS DISTURBANCE -LIKENESS | ROTATION SYNCHRONOUS DISTURBANCE DEGREE | PEAK AMPLITUDE OF HIGH FREQUENCY | PEAK FREQUENCY OF HIGH FREQUENCY |
|---|---|---|---|---|---|---|---|
| TORQUE | Tturn2 | TBPFA | fpeakT | RateNT | NdT | THPFA | fzHiT |
| CURRENT | | IqBPFA | | RateNIq | NdIq | IqHPFA | fzHiIq |
| ROTATION SPEED | | | fpeak$\omega$ | RateN$\omega$ | Nd$\omega$ | | fzH$\omega$ |

FIG. 6

# FIG. 7

# FIG. 8

| CONDITIONAL EXPRESSION 1<br>~DISCRIMINATION OF TURNBACK DISTURBANCE~ | SATISFYING RIGHT EXPRESSION | • $Tturn2 \geq Tturn2_{th}$ |
|---|---|---|
| CONDITIONAL EXPRESSION 2<br>~DISCRIMINATION OF ROTATION SENSOR NOISE<br>(ROTATION SYNCHRONOUS)~ | SATISFYING ALL OF<br>FIVE RIGHT EXPRESSIONS | • $fpeak\omega > fpeak\omega_{th}$<br>• $RateN\omega \geq RateN\omega_{th}$ and $RateNIq \geq RateNIq_{th}$<br>• $Nd\omega < Nd\omega_{th}$<br>• $\min(Nd\omega/NdIq, NdIq/Nd\omega) \geq minNd_{th}$<br>• $IqBPFA \geq IqBPFA_{th}$ |
| CONDITIONAL EXPRESSION 3<br>~DISCRIMINATION OF DISTURBANCE<br>(ROTATION SYNCHRONOUS)~ | SATISFYING FOUR<br>RIGHT EXPRESSIONS | • $RateN\omega \geq RateN\omega_{th}$ and $RateNT \geq RateNT_{th}$<br>• $\min(Nd\omega/NdT, NdT/Nd\omega) \geq minNd_{th}$<br>• $Nd\omega \geq Nd\omega_{th}$ or $(fpeak\omega \leq fpeak\omega_{th}$ and $Nd\omega < Nd\omega_{th})$<br>• $TBPFA \geq TBPFA_{th}$ |
| CONDITIONAL EXPRESSION 4<br>~DISCRIMINATION OF DISTURBANCE<br>(ROTATION ASYNCHRONOUS)~ | SATISFYING TWO<br>RIGHT EXPRESSIONS | • $fpeakT \leq f\_th1$<br>• $TBPFA \geq TBPFA_{th}$ |
| CONDITIONAL EXPRESSION 5<br>~DISCRIMINATION OF OSCILLATION<br>(PHASE MARGIN DETERIORATION)~ | SATISFYING THREE<br>RIGHT EXPRESSIONS | • $f\_th1 < fpeakT \leq f\_th2$<br>• $RateNT < RateNT_{th}$<br>• $TBPFA \geq TBPFA_{th}$ |
| CONDITIONAL EXPRESSION 6<br>~DISCRIMINATION OF OSCILLATION<br>(GAIN MARGIN DETERIORATION)~ | SATISFYING THREE<br>RIGHT EXPRESSIONS | • $f\_th2 < fpeakT \leq f\_th3$<br>• $RateNT < RateNT_{th}$<br>• $TBPFA \geq TBPFA_{th}$ |
| CONDITIONAL EXPRESSION 7<br>~DISCRIMINATION OF TSM NOISE~ | SATISFYING THREE<br>RIGHT EXPRESSIONS | • $\|fzHiT - fzHiIq\| \leq fzH_{th}$<br>• $THPFA \geq THPFA_{th}$<br>• $IqHPFA \geq IqHPFA_{th}$ |
| CONDITIONAL EXPRESSION 8<br>~DISCRIMINATION OF ROTATION SENSOR NOISE<br>(HIGH FREQUENCY)~ | SATISFYING THREE<br>RIGHT EXPRESSIONS | • $\|fzHi\omega - fzHiIq\| \leq fzH_{th}$<br>• not$\{Nd\omega \geq Nd\omega_{th}$ and $RateN\omega \geq RateN\omega_{th}\}$<br>• $IqHPFA \geq IqHPFA_{th}$ |
| CONDITIONAL EXPRESSION 9<br>~FACTOR UNKNOWN~ | SATISFYING ANY ONE OR<br>MORE OF THREE<br>RIGHT EXPRESSIONS | • $TBPFA \geq TBPFA_{th}$<br>• $IqBPFA \geq IqBPFA_{th}$<br>• $IqHPFA \geq IqHPFA_{th}$ |

# FIG. 9

# FIG. 10

FIG. 11

——— VIBRATION SECTION OF RESPONSE DATA
------- VIBRATION SECTION OF SIMULATION RESPONSE DATA

DTW

FIG. 12

——— VIBRATION SECTION OF RESPONSE DATA
------- VIBRATION SECTION OF SIMULATION RESPONSE DATA

DTW

FIG. 13

FIG. 14

START

SELECT VIBRATION FACTOR MODEL — S41

SET MAGNITUDE OF INFLUENCE OF VIBRATION FACTOR — S42

PERFORM SIMULATION — S43

CALCULATE DTW DISTANCE BETWEEN RESPONSE DATA AND SIMULATION RESPONSE DATA — S44

IS DTW DISTANCE MINIMUM SOLUTION? — S45
NO / YES

STORE DTW DISTANCE AS FEATURE AMOUNT — S46

ARE ALL SEARCHES ENDED? — S47
NO / YES

OUTPUTS ALL STORED FEATURE AMOUNTS — S48

END

FIG. 15

FIG. 16

**EP 4 516 634 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6129409 B
- JP 2005186830 A